# EUROPEAN PATENT SPECIFICATION

(11) **EP 1 197 697 B1**
(45) Date of publication and mention of the grant of the patent: **27.08.2003**
(21) Application number: 00122037.5
(22) Date of filing: 11.10.2000
(51) Int. Cl.: F16K 47/02

(54) **Capsule for damping vibrations and noises in a hydraulic installation or apparatus**
Kapsel zur Dämpfung von Schwingungen und Geräuschen in einer hydraulischen Anlage oder einem hydraulischen Gerät
Capsule pour l'amortissement de vibrations et de bruits dans une installation ou dispositif hydraulique

(43) Date of publication of application: 17.04.2002
(73) Proprietor: MASCO CORPORATION OF INDIANA, Indianapolis, IN 46280 (US)
(72) Inventor: Knapp, Alfons, 88400 Biberach/Riss (DE)
(74) Representative: Oppermann, Mark, Dipl.-Ing.

(56) References cited:
- US-A- 4 375 824
- US-A- 5 494 076

## Description

The subject of this invention is a device for damping vibrations and noises in a hydraulic installation or a hydraulic apparatus, a device made in the form of a damping capsule of elastic material, with a thin front wall acting as a membrane and with a perimeter wall intended to be housed in a containment seating.

A similar damping capsule is introduced into a containment seating in an area of an installation or of a hydraulic apparatus which is in communication with the liquid circuit but, preferably, through which the flow does not run directly, so that the capsule absorbs and compensates for the small variations in pressure which correspond to vibrations and noises, when these arise in the installation, without being directly affected by the flow.

A damping capsule of the type considered, its operating principle, and various methods of installation of it in a hydraulic apparatus, are described in Italian patent no. 1,261,305. The damping capsule described in the patent referred to above has produced very favourable results, however it presents two disadvantages.

The first disadvantage is that the seating in which the damping capsule is housed must be machined with a certain accuracy, so as to ensure an efficient seal for the air contained in the capsule itself. This is due to the fact that the elastic material making up the damping capsule, even if it is a little thicker in relation to the perimeter wall, is not capable of exerting a strong pressure against the walls of the seating which holds it, which would be necessary to establish an efficient seal if there were imperfections in finishing or inaccuracies in the dimensions of the containment seating.

The second disadvantage consists of a certain difficulty which arises during the operation of introducing the damping capsule into the seating intended to hold it. In fact, the compression force exerted on the capsule to introduce it tends to cause a partial expulsion of the air from inside it, which then reduces the effectiveness of the damping action exerted by the capsule. Great care is required when introducing the capsule into the seating so that it does not expel the air, and in reality, in spite of every care, it often happens that this objective is not achieved. It is not however possible to perform this introduction using mechanical means.

This invention is aimed at perfecting a damping capsule of the type required, so as to preserve all of its functional qualities or to increase them, but to avoid the disadvantages which it presents.

Therefore a first aim of this invention is to obviate the need, for the purpose of establishing an efficient seal, for accurate machining of the seating intended to contain the damping capsule.

Another aim of the invention is to facilitate the introduction of the damping capsule into the containment seating, preventing any escape of air from within the capsule.

In relation to this, it is one aim of the invention to make possible the mechanical introduction of a damping capsule into the containment seating.

A further aim of the invention is to ensure that, as a consequence of the introduction of the damping capsule into its containment seating, there is an increase in the pressure of the air contained in the capsule, which will increase its efficiency.

Finally it is an aim of the invention to achieve one or more of the aims described without increasing in any appreciable way the manufacturing costs of the damping capsule and by considerably reducing the cost of assembling it.

The above objects and aims are achieved by the features indicated in claim 1. Advantageously developed embodiments of the invention are subject-matter of claims 2 to 10.

According to the invention the damping capsule consists of two parts: a first part of thin, elastic laminated material, including a front portion acting as a membrane, from which runs a portion forming a first internal perimeter wall, which in its turn is connected at its distal extremity to a portion forming a second external perimeter wall, at least approximately parallel to the first internal perimeter wall referred to and defining a cavity in relation to it; and a second tubular part of more rigid material which is thicker than that making up the first laminated part, having a section essentially corresponding to the section of the cavity mentioned previously in the first part and, under operating conditions, being inserted in it.

The damping capsule is prepared for its introduction into a containment seating by inserting (manually or mechanically) the tubular, rigid part into the cavity of the elastic laminated part. When this has been done, it becomes easy to introduce the damping capsule into a corresponding seating, since the force of compression necessary for this operation can by applied to the rigid tubular part, which pulls the elastic laminated part along with it. Since no force of compression is applied to the part making up the membrane, there is no danger that air will be expelled from within the damping capsule during this operation.

On the contrary, the effect of the introduction of the damping capsule into its containment seating makes the air contained in the seating and in the capsule become slightly compressed and therefore under operating conditions the damping capsule becomes full of air at a pressure slightly greater than the pressure which existed in the environment when the damping capsule was introduced into its seating. This increases the efficiency of the damping capsule considerably, because it must then work under the pressure of the water supply which is greater than atmospheric pressure and it is therefore in better conditions of equilibrium when the air which it contains is slightly compressed.

The ease with which the damping capsule can be introduced into a containment seating makes mechanisation of this operation possible and advantageous.

In addition, since the tubular part of the damping capsule is relatively thick and rigid it is able to exert a considerable radial pressure against the wall of the containment seating, and the second external perimeter wall of elastic material, interposed between the tubular part previously mentioned and the wall of the containment seating, is able to ensure an efficient seal between the two parts, acting as a sealing ring. Consequently it is possible to ensure efficient sealing of the capsule in its containment seating without having to depend on critical tolerances of machining. Less accurate machining of the containment seating is therefore sufficient and therefore less costly.

The previously mentioned tubular part of the damping capsule may have essentially cylindrical and parallel surfaces and its external surface may include one or more raised flanges. In this way the seal relating to the containment seating is ensured by these raised flanges, with the aid of the pliable material of the second external perimeter wall of elastic material which acts as a sealing ring, and this enables the pressure exerted by the tubular part on the wall of the containment seating to be concentrated which also helps to remove the need for machining tolerances.

But other shapes are also possible for the tubular part of the damping capsule. For example it may be slightly conical to facilitate its insertion into the laminated part and for its subsequent installation in the containment seating by establishing the mechanical and hydraulic seal via the interposition of the external perimeter wall of the laminated part which acts as a sealing ring.

Alternatively, one or more raised flanges may be offered, not by the tubular part, but by one of the surfaces of the external perimeter wall of the laminated part.

Preferably the previously mentioned tubular part of the damping capsule offers an axial extension slightly larger than that of the cavity formed by the perimeter walls of the laminated part. In this way, when the two parts of the damping capsule are assembled, the tubular part stands out slightly in relation to the laminated part and it becomes especially easy to apply only to the tubular part the compression force necessary to introduce the damping capsule into its containment seating without affecting the membrane of the laminated part. The operation of introduction of the damping capsule into the containment seating therefore presents no difficulties and if required it can easily be mechanised.

The perfected damping capsule can receive any of the installations described in Italian patent no. 1,261,305, and in particular one or more damping capsules may be introduced into seatings hollowed out in fixed or moveable parts of the body of a hydraulic apparatus, or in fixed or moveable parts of a cartridge for a hydraulic apparatus.

These and other characteristics, aims and advantages of the object of this invention will be clarified by the following description of one form of embodiment, which is the preferred form but which constitutes only a non-limiting example, with reference to the attached drawings, in which:
- Figure 1: shows on a scale which is larger than actual size and cross section the laminated part of a damping cartridge as in the invention;
- Figure 2: shows in the same way the tubular part of this damping cartridge, intended to be connected to the laminated part made as in Figure 1;
- Figure 3: shows in the same way the complete damping capsule made by connection of the two parts as in Figures 1 and 2, ready for introduction into a containment seating;
- Figure 4: shows how the damping capsule as in Figure 3 may be introduced, for example, into a containment seating hollowed out in the base of a cartridge for a tap; and
- Figure 5: shows how the damping capsule as in Figure 3 may be introduced, for example, into a containment seating hollowed out in the body of a tap.

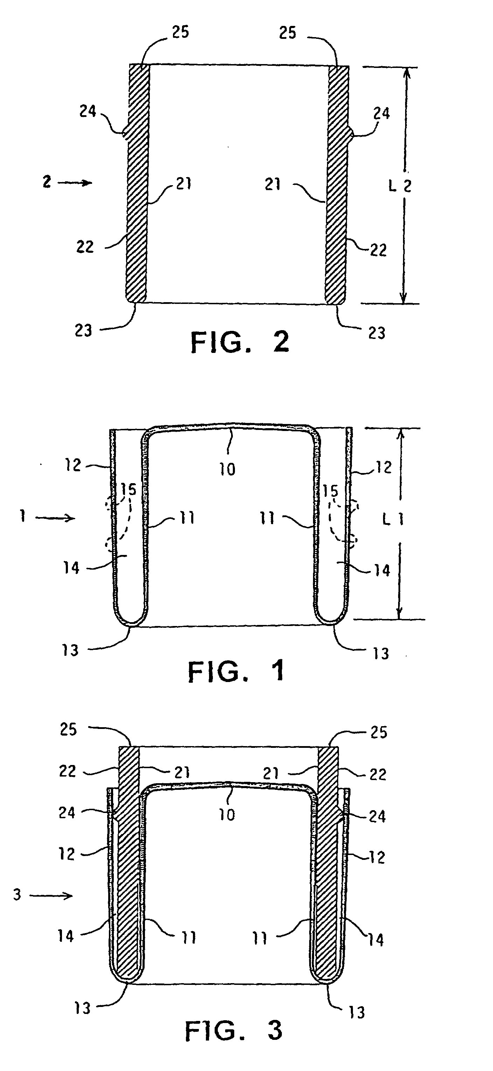

With reference to Figure 1, the laminated part, in thin, elastic material, of a damping capsule as in this invention, denoted in its entirety by reference 1, offers a front portion 10, essentially level when at rest and constituting a membrane, from which runs a portion forming a first, internal perimeter wall 11 almost perpendicular to the membrane 10. This first internal perimeter wall 11 connects at its distal extremity, for example with a semi-toroidal shape 13, to a second, external perimeter wall 12, which extends for a certain length, and preferably (as Figure 1 shows) until it almost reaches the level of the membrane 10. Between the two perimeter walls, internal 11 and external 12, a cavity 14 is defined. The axial length, that is in a direction orthogonal to the plane of the membrane 10, of the cavity 14, is shown as L1.

The laminated part 1 of the damping capsule may be made in any flexible synthetic material, preferably an elastomer.

With reference to Figure 2, the tubular part, of a material which is thicker and more rigid than that forming the laminated part 1, of a damping capsule as in this invention, the tubular part being designated in its entirety by reference 2, is defined by an internal surface 21 and by an external surface 22 which are connected to each other by a terminal surface 23 which may be rounded. Preferably the external surface 22 offers at least one raised flange 24. In its entirety, the tubular part 2 offers a section which essentially corresponds to the section of the cavity 14 of the laminated part 1, as specified in greater detail below, while preferably the length L2 of the tubular part 2 is considerably greater than the length L1 of the cavity 14 of the laminated part 1.

The tubular part 2 may be formed out of a plastic material, preferably rigid, and therefore no particular characteristics are required.

The tubular part 2 is intended to be inserted into the cavity 14 of the laminated part 1 to form, as shown in Figure 3, the complete damping capsule, denoted by reference 3. Preferably the internal surface 21 of the tubular part 2 corresponds to the internal perimeter wall 11 of the laminated part 1, and the external surface 22 of the tubular part 2 allows a certain clearance in relation to the external perimeter wall 11 of the laminated part 1, against which internal surface the flange 24 rests. Since the length L2 of the tubular part 2 is greater than the length L1 of the cavity 14 of the laminated part 1, a part of extremity 25 of the tubular part 2 stands out in relation to portion 10, forming a membrane, of the laminated part 1. This sizing ensures the maximum ease of introduction of the damping capsule into its containment seating, with the seal established by the flange 24 of the tubular part 2, compressed by the external perimeter wall 12 of the laminated part 1. It has already been stated that in place of a single raised flange 24 several raised flanges may be provided.

As has been said, the raised flanges may also be present, not on the tubular part of the damping capsule, but on one of the surfaces of the external perimeter wall of the laminated part. This possibility is indicated by dotted lines at 15 in Figure 1.

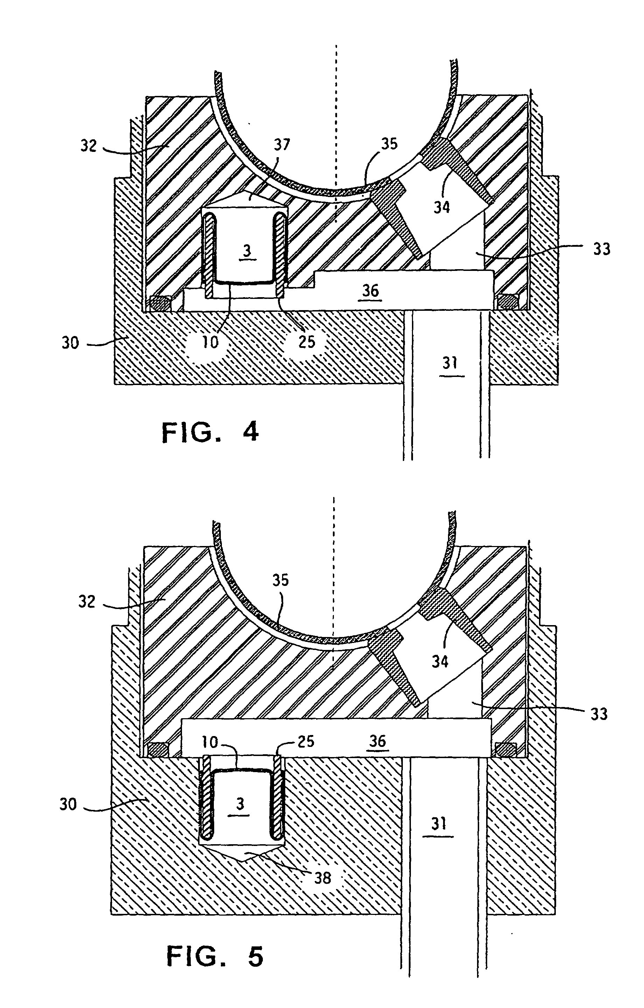

Figures 4 and 5 show two examples of installation of a damping capsule 3 as described, in a cartridge tap.

In both Figures 4 and 5, number 30 denotes a tap body to which is connected an inlet and delivery pipe 31, for which damping of vibrations and noise is required. In the body of tap 30 a cartridge 32 is installed having a passage 33 which communicates with pipe 31. In these examples, passage 33 contains a sealing ring 34 which works together with a spherical shutter 35. The other parts of the tap, which do not concern the application of the invention, are omitted. Taps with spherical shutters of this type are well known in this field, for example via Italian patent no. 1,261,604.

At the base of the cartridge 32 (or, in the same way, in the body itself 30 of the tap) a space 36 is provided which communicates with passages 31 and 33 but is offset in relation to these so that it communicates with the flow which runs through these passages, but does not have the flow itself running through it. The purpose of this arrangement is to avoid the application of damaging dynamic stresses to the damping capsule.

In Figure 4, at the base of the body 32 of the cartridge a seating 37 is hollowed out intended to contain the damping capsule 3. By observing this figure it will be understood how the capsule 3 may be introduced into the containment seating 37 by exerting a compression force on the edge 25 of its tubular part 2, and since this stands out in relation to the membrane 10 there is no danger of applying to the latter a force liable to drive out the air from inside the capsule 3. On the contrary, during the penetration of the damping capsule 3 into the containment seating 37, the internal free space common to these two parts is reduced, and thus the pressure of the air contained in it is increased. Therefore when installation has been carried out there is air in the internal space of the damping capsule 3 and this air is under a pressure greater than atmospheric pressure, which makes the damping action exerted by the capsule 3 on space 36 and through it on passages 31 and 33 through which the flow runs, more effective.

Similarly, in Figure 5, in the body 30 of the tap a seating 38 is hollowed out intended to contain the damping capsule 3. By observing this figure it will be understood how this method of installation is equal to that described with reference to Figure 4, in regard to the introduction of the damping capsule 3 into the containment seating without danger of applying to the membrane a force liable to drive out the air from inside the capsule 3, rather causing an increase in the air pressure contained in it. Therefore, even in this form of installation the same damping already described is achieved, exerted by the capsule 3 on the space 36 and, through this, on the passages 31 and 33 through which the flow runs.

Although Figures 4 and 5 show two examples of possible installations of a damping capsule according to the invention in taps with spherical shutters, it must be understood that these damping capsules may be installed in any type of tap, in any hydraulic apparatus different from a tap or even in an apparatus constituting an accessory having the sole function of damping vibrations and noises in a pipe.

A device for the damping of vibrations and noises in a hydraulic installation or in a hydraulic apparatus is disclosed, the device being made in the form of a damping capsule of elastic material, with a thin front wall acting as a membrane and with a perimeter wall intended to be housed in a containment seating, in which the damping capsule consists of two parts: a first part of laminated material which is fine and elastic, preferably elastomer, including a front portion acting as a membrane, from which a portion runs which forms a first internal perimeter wall which is in its turn connected at its distal extremity to a portion forming a second external perimeter wall, at least approximately parallel to the first internal perimeter wall and defining a cavity in relation to it; and a second tubular part of more rigid material which is thicker than that making up the first laminated part, preferably a rigid plastic material, having a section essentially corresponding to the section of the cavity of the first part, and, under operating conditions, being inserted in it, and preferably projecting from it for a short length.

It must be understood that the invention is not limited to the forms of embodiment described and illustrated as examples. Some modifications have been described, and others are within the capabilities of persons skilled in this field. These modifications and any substitution with equivalent techniques may be made to what has been described and illustrated, without departing from the scope of the invention as defined in the appended claims.

## Claims

1. A device for damping vibrations and noises in a hydraulic installation or in a hydraulic apparatus, the device being made in the form of a damping capsule (3) of elastic material, with a thin front wall acting as a membrane and with a perimeter wall intended to be housed in a containment seating (37, 38),
**characterised in that** said damping capsule (3) consists of two parts:
a first part (1) of thin, elastic laminated material, including a front portion (10) acting as the membrane, from which runs a portion forming a first internal perimeter wall (11), which in its turn is connected at its distal extremity to a portion forming a second external perimeter wall (12), at least approximately parallel to said internal perimeter wall (11) and defining a cavity (14) in relation to it; and
a second tubular part (2) of more rigid material which is thicker than that making up said laminated first part (1), having a section essentially corresponding to the section of said cavity (14) of said first part (1), and, under operating conditions, being inserted in it.

2. A device according to claim 1, **characterised in that** said tubular part (2) of said damping capsule (3) offers essentially cylindrical and parallel surfaces (21, 22).

3. A device according to claim 1, **characterised in that** said tubular part (2) of said damping capsule (3) offers a slightly conical external surface suitable for housing in a containment seating (37, 38) establishing the mechanical and hydraulic seal via the interposition of said external perimeter wall (12) of said laminated part (1) which acts as a sealing ring.

4. A device according to claim 1 or 2, **characterised in that** the external surface (22) of said tubular part (2) of said damping capsule (3) includes at least one raised flange (24) working together with said external perimeter wall (12) of said laminated part (1) to establish the seal in relation to said containment seating (37, 38).

5. A device acording to claim 4, **characterised in that** the internal surface (21) of said tubular part (2) corresponds to said internal perimeter wall (11) of said laminated part (1), the external surface (22) of said tubular part (2) offers a clearance in relation to said external perimeter wall (12) of said laminated part (1), and said raised flange (24) extends so as almost to come into contact with the internal surface of said external perimeter wall (12).

6. A device according to claim 1, **characterised in that** said external perimeter wall (12) of said laminated part (1) offers at least one raised flange (15).

7. A device according to one of the preceding claims, **characterised in that** said tubular part (2) offers an axial extension (L2) which is slightly greater than that (L1) of said cavity (14) formed by said perimeter walls (11, 12) of said laminated part (1).

8. A device according to one of the preceding claims, **characterised in that** said laminated part (1) of said capsule (3) is made of a flexible synthetic material, preferably elastomer.

9. A device according to one of the preceding claims, **characterised in that** said tubular part (2) of said capsule (3) is made of a plastic material, preferably rigid.

10. A hydraulic apparatus **characterised in that** it includes one or more devices for damping vibrations and noises as in one of the preceding claims.

## Patentansprüche

1. Vorrichtung zur Dämpfung von Schwingungen und Geräuschen in einer hydraulischen Anlage oder in einem hydraulischen Gerät, wobei die Vorrichtung in der Form einer Dämpfungskapsel (3) aus elastischem Material ausgebildet ist, mit einer dünnen Vorderwand, die als eine Membran wirkt, und mit einer Umfangswand, die dafür bestimmt ist, in einem Abschlußsitz (37, 38) untergebracht zu werden,
**dadurch gekennzeichnet, daß** die Dämpfungskapsel (3) aus zwei Teilen besteht:
einem ersten Teil (1) aus einem dünnen, elastischen lamellaren Material, umfassend einen Vorderabschnitt (10), der als die Membran wirkt, von dem aus ein Abschnitt ausgeht, der eine erste innere Umfangswand (11) bildet und seinerseits an seinem distalen Ende mit einem Abschnitt verbunden ist, der eine zweite äußere Umfangswand (12) bildet, die wenigstens annähernd parallel zu der inneren Umfangswand (11) verläuft und in Bezug zu dieser einen Hohlraum (14) begrenzt; und
einem zweiten rohrförmigen Teil (2) aus einem steiferen Material, welches dicker ist als das, aus dem das lamellare erste Teil (1) besteht, und das einen Querschnitt hat, der im wesentlichen dem Querschnitt des Hohlraums (14) des ersten Teils (1) entspricht, und das, unter Betriebsbedingungen, in diesen eingesetzt ist.

2. Vorrichtung nach Anspruch 1, **dadurch gekennzeichnet, daß** das rohrförmige Teil (2) der Dämpfungskapsel (3) im wesentlichen zylindrische und parallele Flächen (21, 22) aufweist.

3. Vorrichtung nach Anspruch 1, **dadurch gekennzeichnet, daß** das rohrförmige Teil (2) der Dämpfungskapsel (3) eine leicht konische Außenfläche aufweist, die zur Unterbringung in einem Abschlußsitz (37, 38) geeignet ist, der die mechanische und hydraulische Dichtung durch die Einfügung der äußeren Umfangswand (12) des lamellaren Teils (1) herstellt, die als ein Dichtring wirkt.

4. Vorrichtung nach Anspruch 1 oder 2, **dadurch gekennzeichnet, daß** die Außenfläche (22) des rohrförmigen Teils (2) der Dämpfungskapsel (3) mindestens einen erhabenen Bund (24) aufweist, der mit der äußeren Umfangswand (12) des lamellaren Teils (1) zusammenwirkt, um die Dichtung in Bezug zu dem Abschlußsitz (37, 38) herzustellen.

5. Vorrichtung nach Anspruch 4, **dadurch gekennzeichnet, daß** die Innenfläche (21) des rohrförmigen Teils (2) der inneren Umfangswand (11) des lamellaren Teils (1) entspricht, die Außenfläche (22) des rohrförmigen Teils (2) einen Abstand in Bezug zu der äußeren Umfangswand (12) des lamellaren Teils (1) aufweist, und der erhabene Bund (24) sich erstreckt, um fast mit der Innenfläche der äußeren Umfangswand (12) in Kontakt zu kommen.

6. Vorrichtung nach Anspruch 1, **dadurch gekennzeichnet, daß** die äußere Umfangswand (12) des lamellaren Teils (1) mindestens einen erhabenen Bund (15) aufweist.

7. Vorrichtung nach einem der vorhergehenden Ansprüche, **dadurch gekennzeichnet, daß** das rohrförmige Teil (2) eine axiale Erstreckung (L2) aufweist, die geringfügig größer ist als die (L1) des durch die Umfangswände (11, 12) des lamellaren Teils (1) gebildeten Hohlraums (14).

8. Vorrichtung nach einem der vorhergehenden Ansprüche, **dadurch gekennzeichnet, daß** das lamellare Teil (1) der Kapsel (3) aus einem flexiblen Kunststoffmaterial, vorzugsweise einem Elastomer besteht.

9. Vorrichtung nach einem der vorhergehenden Ansprüche, **dadurch gekennzeichnet, daß** das rohrförmige Teil (2) der Kapsel (3) aus einem vorzugsweise steifen Kunststoffmaterial besteht.

10. Hydraulisches Gerät, **dadurch gekennzeichnet, daß** es eine oder mehrere Vorrichtungen zur Dämpfung von Schwingungen und Geräuschen nach einem der vorhergehenden Ansprüche aufweist.

## Revendications

1. Dispositif pour amortir des vibrations et des bruits dans une installation hydraulique ou un appareil hydraulique, lequel dispositif est réalisé sous la forme d'une capsule d'amortissement (3) en matière élastique comportant une paroi avant mince qui joue le rôle d'une membrane et une paroi périphérique destinée à être reçue dans un logement enveloppant (37, 38),
**caractérisé en ce que** ladite capsule d'amortissement (3) se compose de deux parties:
une première partie (1) formée d'une matière élastique et mince disposée en couches, comprenant une portion avant (10) qui joue le rôle de la membrane et à partir de laquelle s'étend une portion formant une première paroi périphérique intérieure (11) elle-même reliée au niveau de son extrémité distale à une portion formant une seconde paroi périphérique extérieure (12) au moins approximativement parallèle à ladite paroi périphérique intérieure (11) et définissant une cavité (14) en relation avec celle-ci; et
une seconde partie tubulaire (2) formée d'une matière plus rigide, plus épaisse que celle formant ladite première partie disposée en couches (1), qui présente une section correspondant fondamentalement à la section de ladite cavité (14) de ladite première partie (1) et qui, dans des conditions de fonctionnement, est insérée dans celle-ci.

2. Dispositif selon la revendication 1, **caractérisé en ce que** ladite partie tubulaire (2) de ladite capsule d'amortissement (3) présente des surfaces fondamentalement cylindriques et parallèles.

3. Dispositif selon la revendication 1, **caractérisé en ce que** ladite partie tubulaire (2) de ladite capsule d'amortissement (3) présente une surface extérieure légèrement conique adaptée pour être reçue dans un logement enveloppant (37, 38) en établissant le joint mécanique et hydraulique grâce à l'interposition de ladite paroi périphérique extérieure (12) de ladite partie disposée en couches (1), qui joue le rôle d'une bague d'étanchéité.

4. Dispositif selon la revendication 1 ou 2,
**caractérisé en ce que** la surface extérieure (22) de ladite partie tubulaire (2) de ladite capsule d'amortissement (3) comprend au moins un rebord surélevé (24) qui coopère avec ladite paroi périphérique extérieure (12) de ladite partie disposée en couches (1) pour établir le joint en relation avec ledit logement enveloppant (37, 38).

5. Dispositif selon la revendication 4, **caractérisé en ce que** la surface intérieure (21) de ladite partie tubulaire (2) correspond à ladite paroi périphérique intérieure (11) de ladite partie disposée en couches (1), **en ce que** la surface extérieure (22) de ladite partie tubulaire (2) présente un espace par rapport à ladite paroi périphérique extérieure (12) de ladite partie disposée en couches (1), et **en ce que** ledit rebord surélevé (24) s'étend de manière à venir presque en contact avec la surface intérieure de ladite paroi périphérique extérieure (12).

6. Dispositif selon la revendication 1, **caractérisé en ce que** ladite paroi périphérique extérieure (12) de ladite partie disposée en couches (1) présente au moins un rebord surélevé (15).

7. Dispositif selon l'une quelconque des revendications précédentes, **caractérisé en ce que** ladite partie tubulaire (2) présente une étendue axiale (L2) légèrement supérieure à celle (L1) de ladite cavité (14) formée par lesdites parois périphériques (11, 12) de ladite partie disposée en couches (1).

8. Dispositif selon l'une quelconque des revendications précédentes, **caractérisé en ce que** ladite partie disposée en couches (1) de ladite capsule (3) est formée d'une matière synthétique flexible, de préférence un élastomère.

9. Dispositif selon l'une quelconque des revendications précédentes, **caractérisé en ce que** ladite partie tubulaire (2) de ladite capsule (3) est formée d'une matière plastique, de préférence rigide.

10. Appareil hydraulique **caractérisé en ce qu'**il comprend un ou plusieurs dispositifs pour amortir des vibrations et des bruits selon l'une quelconque des revendications précédentes.
